# EUROPEAN PATENT APPLICATION

(11) **EP 2 600 455 A2**
(43) Date of publication of application: **05.06.2013**
(21) Application number: 13157069.9
(22) Date of filing: 20.06.2006
(51) Int. Cl.: H01M 8/04, H01M 8/06, H01M 8/12

(54) **Solid oxide fuel cell system**

(30) Priority: 20.06.2005 JP 2005179020; 31.05.2006 JP 2006151674
(62) Divisional of application: 06766968.9
(71) Applicant: Kyocera Corporation, Fushimi-ku kyoto-shi Kyoto (JP)
(72) Inventor: Shigehisa, Takashi, Kagoshima, Kagoshima (JP); Takahashi, Naruto, Kagoshima, Kagoshima (JP)
(74) Representative: Brötz, Helmut

(57) **Abstract**

A solid oxide fuel cell system 1 comprises a fuel cell main body 20 provided with a gas reformer 22 and a fuel cell 20, a reforming gas supply means 12 for supplying a reforming gas to the gas reformer 22, an oxygen-containing gas supply means 13 for supplying an oxygen-containing gas to the gas reformer 22, a water supply means 14 for supplying water or steam to the gas reformer 22 and an ambient temperature sensor 70 for detecting a temperature outside of the solid oxide fuel cell system 1. The system further comprises a control means 15 for controlling during operation of the fuel cell 21 whether, based on a signal from the ambient temperature sensor 70, for carrying out a reforming reaction of the reforming gas with the oxygen-containing gas and/or water in the gas reformer 22, switching between an oxygen-containing gas supply means 13 and water supply means 14 is carried out, or both the supply means 13, 14 are used in combination.

## Description

### Technical Field

The present invention relates to a solid oxide fuel cell system, and in particular, to a gas-water supply system of gases supplied to a gas reformer of a fuel cell.

### Background Art

In general, fuel cells are known as devices that convert energy of a fuel into electrical energy. A fuel cell generally includes a pair of electrodes disposed so as to sandwich an electrolyte. An electrochemical reaction is generated by bringing a reaction gas (fuel gas) of hydrogen into contact with a surface of one of the pair of electrodes and bringing air containing oxygen into contact with a surface of the other electrode. The fuel cell extracts electrical energy from between the electrodes utilizing this electrochemical reaction. Patent Document 1 discloses a method of operating a fuel cell system including a gas reformer. In the operation method, in order to prevent the temperature of the gas reformer from rapidly increasing, steam reforming and partial oxidation reforming are performed in combination, and the ratio of steam reforming, which is an endothermic reaction, to partial oxidation reforming is increased.
Patent Document 1: Japanese Unexamined Patent Application Publication No. 2000-40519

### Disclosure of Invention

### Problems to be Solved by the Invention

However, in the method of operating a fuel cell system disclosed in Patent Document 1, since reforming is performed by combining steam reforming with partial oxidation reforming, water for performing steam reforming is necessary. Therefore, this method is disadvantageous in that when water cannot be supplied to the gas reformer, the fuel cell system must be stopped.

In general, in a fuel cell system that performs steam reforming, it is difficult to realize water-supply independence (i.e., to provide all the water required for the fuel cell by using condensed water). Accordingly, it is necessary to provide a line of outside compensatory water. Even if the water-supply independence can be realized, the following problems also occur: Provision of a generation means of the condensed water necessarily results in increased cost. In addition, when the water runs short, the system must be stopped. A water supply system may be frozen by the effect of the ambient temperature. The volume of condensed water is decreased. The electric power consumption is increased by using a heater for preventing freezing.

The present invention has been conceived in order to solve the above problems.

Means for solving the problems according to a first aspect of the invention:
(1) A solid oxide fuel cell system according to claim 1 comprises a fuel cell main body provided with a gas reformer and a fuel cell, a reforming gas supply means for supplying a reforming gas to the gas reformer;
   an oxygen-containing gas supply means for supplying an oxygen-containing gas to the gas reformer;
   a water supply means for supplying water or steam to the gas reformer;
   and an ambient temperature sensor for detecting a temperature outside of the solid oxide fuel cell system. The system further comprises a control means for controlling during operation of the fuel cell whether, based on a signal from the ambient temperature sensor, for carrying out a reforming reaction of the reforming gas with the oxygen-containing gas and/or water in the gas reformer, switching between an oxygen-containing gas supply means and water supply means is carried out, or both the supply means are used in combination.
   The first aspect of the invention also comprises as a further independent subject matter a solid oxide fuel cell system which comprises a fuel cell provided with a gas reformer, a reforming gas supply means for supplying a reforming gas to the gas reformer;
   an oxygen-containing gas supply means for supplying an oxygen-containing gas to the gas reformer;
   a water supply means for supplying water or steam to the gas reformer;
   and an ambient temperature sensor for detecting a temperature outside of the solid oxide fuel cell system. The system further comprises a control means for controlling during operation of the fuel cell whether, based on a signal from the ambient temperature sensor, for carrying out a reforming reaction of the reforming gas with the oxygen-containing gas and/or water in the gas reformer, switching between an oxygen-containing gas supply means and water supply means is carried out, or both the supply means are used in combination.
(2) In a first preferred embodiment of the solid oxide fuel cell system according to claim 2 based on claim 1 or comprising the features of the above mentioned further independent subject matter of the first aspect of the invention, the control means stops the water supply means and activates the oxygen-containing gas supply means for carrying out a reforming reaction if the control means, based on a signal from the ambient temperature sensor, detects that the temperature becomes lower than a predetermined value.
(3) In a second preferred embodiment of the solid oxide fuel cell system according to the first aspect of the invention, comprising the features of claim 1 or of the mentioned further independent subject matter of the first aspect of invention, and in particular comprising the additional features of the first preferred embodiment of the solid oxide fuel cell system according to the first aspect of the invention, said solid oxide fuel cell system comprises a gas-water supply system (10) for supplying a plurality of kinds of gases and water to the gas reformer, the gas-water supply system comprising said reforming gas supply means, said oxygen-containing gas supply means, said water supply means and said control means.
(4) In a third preferred embodiment of the solid oxide fuel cell system according to the first aspect of the invention, comprising the features of claim 1 or of the mentioned further independent subject matter of the first aspect of invention, and in particular comprising the additional features of one or more of the before mentioned preferred embodiments of the solid oxide fuel cell system according to the first aspect of the invention, said solid oxide fuel cell system comprises a water tank storing water,
   wherein the water supply means are for supplying water or steam from said water tank to the gas reformer, and wherein said control means is for controlling whether, based on a signal from a stored water volume sensor which detects the volume of water kept in said water tank for carrying out a reforming reaction of the reforming gas with the oxygen-containing gas and/or water in the gas reformer, switching between an oxygen-containing gas supply means and a water supply means is carried out, or both the supply means are used in combination.
(5) In a fourth preferred embodiment of the solid oxide fuel cell system according to the first aspect of the invention comprising the features of the third preferred embodiment of the solid oxide fuel cell system according to the first aspect of the invention, said water tank stores water condensed by exhaust heat recovery of the fuel cell.
(6) In fifth preferred embodiment of the solid oxide fuel cell system according to the first aspect of the invention comprising the features of the third preferred embodiment of the solid oxide fuel cell system according to the first aspect of the invention, said water tank stores water supplied from an outside water source.
(7) In a sixth preferred embodiment of the solid oxide fuel cell system according to the first aspect of the invention comprising the features of the third preferred embodiment of the solid oxide fuel cell system according to the first aspect of the invention, the control means stops the water supply means and switches from the water supply means to the oxygen-containing gas supply means so as to perform the reforming reaction if the control means, based on a signal from a stored water volume sensor, detects the volume of water in said water tank that is lower than a predetermined value.
(8) In a seventh preferred embodiment of the solid oxide fuel cell system according to the first aspect of the invention comprising the features of claim 1 or of the mentioned further independent subject matter of the first aspect of invention, and in particular comprising the additional features of one or more of the before mentioned preferred embodiments of the solid oxide fuel cell system according to the first aspect of the invention, the solid oxide fuel cell system further comprises a generated power detector for detecting an electric power generated by the fuel cell, wherein, the control means switches from the water supply means to the oxygen-containing gas supply means if the control means, based on a signal from the generated power detector, detects the generated electric power that is lower than a predetermined value.
(9) In an eighth preferred embodiment of the solid oxide fuel cell system according to the first aspect of the invention comprising the features of claim 1 or of the mentioned further independent subject matter of the first aspect of invention, and in particular comprising the additional features of one or more of the before mentioned preferred embodiments of the solid oxide fuel cell system according to the first aspect of the invention, the solid oxide fuel cell system further comprises a cell temperature sensor for detecting a temperature of the fuel cell, wherein, the control means switches from the water supply means to the oxygen-containing gas supply means if the control means, based on a signal from the cell temperature sensor, detects the temperature that is lower than a predetermined value.
(10) In a ninth preferred embodiment of the solid oxide fuel cell system according to the first aspect of the invention comprising the features of claim 1 or of the mentioned further independent subject matter of the first aspect of invention, and in particular comprising the additional features of one or more of the before mentioned preferred embodiments of the solid oxide fuel cell system according to the first aspect of the invention,
   the control means switches between the water supply means and the oxygen-containing gas supply means after both the supply means operate simultaneously for a predetermined period of time.

### Effect of said first aspect of the Invention:

In the solid oxide fuel cell system according to claim 1 or according to the mentioned further independent subject matter of the first aspect of the invention, when the ambient temperature is decreased in winter, at night, or the like and water cannot be supplied because of, for example, freezing of a water pipe or a pipe for supplying water, partial oxidation reforming is performed rather than steam reforming by switching from the water supply means to the oxygen-containing gas supply means. Thereby, a problem of impossibility of steam reforming due to freezing of water is eliminated. Furthermore, when the temperature of the fuel cell is decreased by the presence of the ambient temperature, it is also advantageous that partial oxidation reforming, which is an exothermic reaction, is performed.

In the solid oxide fuel cell system according to the second and third preferred embodiments of the first aspect of the invention, water supply means and oxygen-containing gas supply means are connected to a gas reformer in parallel, and water can be supplied from a water tank storing water to the water supply means. The water supply means may supply water to the gas reformer without further treatment or steam prepared in advance to the gas reformer. Furthermore, control means for controlling the gas supplied from each of the water supply means and the oxygen-containing gas supply means to the gas reformer can switch between the water supply means and the oxygen-containing gas supply means on the basis of a signal from a stored water volume sensor of the water tank.

Accordingly, when the volume of water stored in the water tank is sufficient, steam reforming can be performed by supplying water only from the water supply means to the gas reformer.

In contrast, when the water stored in the water tank runs short, partial oxidation reforming can be performed by stopping the water supply means and switching to the oxygen-containing gas supply means. Thus, the operation can continue without stopping the gas reformer and the total system.

In addition, by using both the water supply means and the oxygen-containing gas supply means in combination, a stable reforming reaction can be constantly performed while a variation in the amount of water supplied from the water tank is compensated for.

In the solid oxide fuel cell system according to the fourth preferred embodiment of the first aspect of the invention, the water tank may store condensed water generated by recovering exhaust heat of the fuel cell. In this case, the condensed water can be effectively used without disposing of the water. The amount of condensed water supplied varies, but when the volume of water stored in the water tank is sufficient, steam reforming can be performed by supplying water or steam only from the water supply means to the gas reformer.

In contrast, when the volume of condensed water is decreased and the water stored in the water tank runs short, partial oxidation reforming can be performed by stopping the water supply means and switching to the oxygen-containing gas supply means. In addition, when the volume of stored water is recovered, the operation can be switched to steam reforming again. Therefore, the operation can continue without stopping the gas reformer and the total system. Thus, compensatory water need not be supplied from the outside and a complete water-supply independent system can be established.

In the solid oxide fuel cell system according to the fifth preferred embodiment of the first aspect of the invention, the water tank may store water supplied from an outside water source. In this case, when the fuel cell system is used in areas where an outside water source can be ensured (areas where water infrastructure facilities such as waterworks are provided), a sufficient amount of stored water can be obtained in the normal state. Accordingly, steam reforming can be performed by supplying water or steam only from the water supply means to the gas reformer. In contrast, even in areas where an outside water source can be ensured, for example, when the water stored in the water tank runs short because of stopping of water supply due to a disaster, engineering work, or the like, partial oxidation reforming can be performed by stopping the water supply means and switching to the oxygen-containing gas supply means. In addition, when the stopping of the water supply ends, the operation can be switched to steam reforming again. Accordingly, the operation can continue without stopping the gas reformer and the total system.

In addition, a fuel cell system that can be used in areas where water infrastructure facilities are not provided, e.g., remote countries and deserts, without further treatment can be provided. Furthermore, for example, even when a fuel cell system which has been used in an area where water infrastructure facilities are provided (in which steam reforming has been performed) must be moved to an area where such water infrastructure facilities are not provided, this system can be used without further treatment.

Furthermore, even when the quality of water (such as public water or well water) supplied from the outside water source is decreased, partial oxidation reforming can be performed. Thus, for example, severe degradation of the fuel cell can be prevented. Such a decrease in the water quality can be detected by a sensor, and partial oxidation reforming can be performed on the basis of the detection.

Furthermore, even when a water supply pipe connected to the water tank or a water supply pipe in the water supply means is frozen, partial oxidation reforming can be performed by stopping the water supply means and switching to the oxygen-containing gas supply means. When the water supply pipe becomes unfrozen, the operation can be switched to steam reforming again. Accordingly, the operation can continue without stopping the gas reformer and the total system.

In the solid oxide fuel cell system according to the sixth preferred embodiment of the first aspect of the invention, since the volume of water stored in the water tank is detected on the basis of a signal from the stored water volume sensor, switching between steam reforming and partial oxidation reforming can be more accurately and more rapidly performed.

In the solid oxide fuel cell system according to the seventh preferred embodiment of the first aspect of the invention, when the amount of power generation is decreased to a predetermined value or lower, the performance of the fuel cell is decreased. Accordingly, in such a case, partial oxidation reforming, which is an exothermic reaction, is performed rather than steam reforming, which is an endothermic reaction, so that the temperature of the fuel cell adjacent to the gas reformer is not decreased or is increased to an appropriate temperature. Thus, the efficiency of the power generation reaction can be increased.

In the solid oxide fuel cell system according to the eighth preferred embodiment of the first aspect of the invention, when the temperature of the fuel cell is decreased, the performance of the fuel cell is decreased. Accordingly, in such a case, partial oxidation reforming, which is an exothermic reaction, is performed rather than steam reforming, which is an endothermic reaction, so that the temperature of the fuel cell adjacent to the gas reformer is not decreased or is increased to an appropriate temperature. Thus, the efficiency of the power generation reaction can be increased.

In the solid oxide fuel cell system according to the ninth preferred embodiment of the first aspect of the invention, when switching between the oxygen-containing gas supply means and the water supply means is performed, an adverse effect on the fuel cell due to a rapid change can be prevented by operating both the supply means simultaneously for a predetermined period of time. Accordingly, a reforming reaction can be gradually switched.

It is also an object of the present invention to provide a solid oxide fuel cell system in which control with consideration of the effect of the stored water volume of a water tank can be performed and complete water-supply independence can be realized.

Means for solving the problems according to a second aspect of the invention:
(1) A solid oxide fuel cell system according to a second aspect of the invention comprises a fuel cell provided with a gas reformer; a water tank storing water; and a gas-water supply system for supplying a plurality of kinds of gases and water to the gas reformer. The gas-water supply system comprising: a reforming gas supply means for supplying a reforming gas to the gas reformer; an oxygen-containing gas supply means for supplying an oxygen-containing gas to the gas reformer; a water supply means for supplying water or steam from the water tank to the gas reformer; and a control means for controlling whether, based on a signal from a stored water volume sensor which detects the volume of water kept in the water tank for carrying out a reforming reaction of the reforming gas with the oxygen-containing gas and/or water in the gas reformer, switching between an oxygen-containing gas supply means and water supply means is carried out, or both the supply means are used in combination.
(2) In the solid oxide fuel cell system according to a first preferred embodiment of said second aspect of the invention, the water tank stores water condensed by exhaust heat recovery of the fuel cell.
(3) In the solid oxide fuel cell system according to a second preferred embodiment of said second aspect of the invention, said water tank stores water supplied from an outside water source.
(4) In the solid oxide fuel cell system according to a third preferred embodiment of said second aspect of the invention, the control means stops the water supply means and switches from the water supply means to the oxygen-containing gas supply means so as to perform the reform reaction if the control means, based on a signal from a stored water volume sensor, detects the volume of water in the water tank that is lower than a predetermined value.
(5) In the solid oxide fuel cell system according to a fourth preferred embodiment of said second aspect of the invention, the system further comprises a generated power detector for detecting an electric power generated by the fuel cell. The control means switches from the water supply means to the oxygen-containing gas supply means if the control means, based on a signal from the generated power detector, detects the generated electric power that is lower than a predetermined value.
(6) In the solid oxide fuel cell system according to a fifth preferred embodiment of said second aspect of the invention, the system further comprises a cell temperature sensor for detecting a temperature of the fuel cell. The control means switches from the water supply means to the oxygen-containing gas supply means if the control means, based on a signal from the cell temperature sensor, detects the temperature that is lower than a predetermined value.
(7) In the solid oxide fuel cell system according to a sixth preferred embodiment of said second aspect of the invention, the system further comprises an ambient temperature sensor for detecting a temperature outside of said solid oxide fuel cell system. The control means switches from the water supply means to the oxygen-containing gas supply means if the control means, based on a signal from the ambient temperature sensor, detects the temperature that is lower than a predetermined value.
(8) In the solid oxide fuel cell system according to a seventh preferred embodiment of said second aspect of the invention and in particularly of its preferred embodiments as described before, the control means switches between the water supply means and the oxygen-containing gas supply means after both the supply means operate simultaneously for a predetermined period of time.

### Effect of said second aspect of the Invention:

In the solid oxide fuel cell system according to said second aspect of the invention, water supply means and oxygen-containing gas supply means are connected to a gas reformer in parallel, and water can be supplied from a water tank storing water to the water supply means. The water supply means may supply water to the gas reformer without further treatment or steam prepared in advance to the gas reformer. Furthermore, control means for controlling the gas supplied from each of the water supply means and the oxygen-containing gas supply means to the gas reformer can switch between the water supply means and the oxygen-containing gas supply means on the basis of a signal from a stored water volume sensor of the water tank.

Accordingly, when the volume of water stored in the water tank is sufficient, steam reforming can be performed by supplying water only from the water supply means to the gas reformer.

In contrast, when the water stored in the water tank runs short, partial oxidation reforming can be performed by stopping the water supply means and switching to the oxygen-containing gas supply means. Thus, the operation can continue without stopping the gas reformer and the total system.

In addition, by using both the water supply means and the oxygen-containing gas supply means in combination, a stable reforming reaction can be constantly performed while a variation in the amount of water supplied from the water tank is compensated for.

In the solid oxide fuel cell system according to the first preferred embodiment of said second aspect of the invention, the water tank may store condensed water generated by recovering exhaust heat of the fuel cell. In this case, the condensed water can be effectively used without disposing of the water. The amount of condensed water supplied varies, but when the volume of water stored in the water tank is sufficient, steam reforming can be performed by supplying water or steam only from the water supply means to the gas reformer.

In contrast, when the volume of condensed water is decreased and the water stored in the water tank runs short, partial oxidation reforming can be performed by stopping the water supply means and switching to the oxygen-containing gas supply means. In addition, when the volume of stored water is recovered, the operation can be switched to steam reforming again. Therefore, the operation can continue without stopping the gas reformer and the total system. Thus, compensatory water need not be supplied from the outside and a complete water-supply independent system can be established.

In the solid oxide fuel cell system according to the second preferred embodiment of said second aspect of the invention, the water tank may store water supplied from an outside water source. In this case, when the fuel cell system is used in areas where an outside water source can be ensured (areas where water infrastructure facilities such as waterworks are provided), a sufficient amount of stored water can be obtained in the normal state. Accordingly, steam reforming can be performed by supplying water or steam only from the water supply means to the gas reformer.

In contrast, even in areas where an outside water source can be ensured, for example, when the water stored in the water tank runs short because of stopping of water supply due to a disaster, engineering work, or the like, partial oxidation reforming can be performed by stopping the water supply means and switching to the oxygen-containing gas supply means. In addition, when the stopping of the water supply ends, the operation can be switched to steam reforming again. Accordingly, the operation can continue without stopping the gas reformer and the total system.

In addition, a fuel cell system that can be used in areas where water infrastructure facilities are not provided, e.g., remote countries and deserts, without further treatment can be provided. Furthermore, for example, even when a fuel cell system which has been used in an area where water infrastructure facilities are provided (in which steam reforming has been performed) must be moved to an area where such water infrastructure facilities are not provided, this system can be used without further treatment.

Furthermore, even when the quality of water (such as public water or well water) supplied from the outside water source is decreased, partial oxidation reforming can be performed. Thus, for example, severe degradation of the fuel cell can be prevented. Such a decrease in the water quality can be detected by a sensor, and partial oxidation reforming can be performed on the basis of the detection.

Furthermore, even when a water supply pipe connected to the water tank or a water supply pipe in the water supply means is frozen, partial oxidation reforming can be performed by stopping the water supply means and switching to the oxygen-containing gas supply means. When the water supply pipe becomes unfrozen, the operation can be switched to steam reforming again. Accordingly, the operation can continue without stopping the gas reformer and the total system.

In the solid oxide fuel cell system according to the third preferred embodiment of said second aspect of the invention, since the volume of water stored in the water tank is detected on the basis of a signal from the stored water volume sensor, switching between steam reforming and partial oxidation reforming can be more accurately and more rapidly performed.

In the solid oxide fuel cell system according to the fourth preferred embodiment of said second aspect of the invention, when the amount of power generation is decreased to a predetermined value or lower, the performance of the fuel cell is decreased. Accordingly, in such a case, partial oxidation reforming, which is an exothermic reaction, is performed rather than steam reforming, which is an endothermic reaction, so that the temperature of the fuel cell adjacent to the gas reformer is not decreased or is increased to an appropriate temperature. Thus, the efficiency of the power generation reaction can be increased.

In the solid oxide fuel cell system according to the fifth preferred embodiment of said second aspect of the invention, when the temperature of the fuel cell is decreased, the performance of the fuel cell is decreased. Accordingly, in such a case, partial oxidation reforming, which is an exothermic reaction, is performed rather than steam reforming, which is an endothermic reaction, so that the temperature of the fuel cell adjacent to the gas reformer is not decreased or is increased to an appropriate temperature. Thus, the efficiency of the power generation reaction can be increased.

In the solid oxide fuel cell system according to the sixth preferred embodiment of said second aspect of the invention, when the ambient temperature is decreased in winter, at night, or the like and water cannot be supplied because of, for example, freezing of a water pipe or a pipe for supplying water, partial oxidation reforming is performed rather than steam reforming by switching from the water supply means to the oxygen-containing gas supply means. Thereby, a problem of impossibility of steam reforming due to freezing of water is eliminated. Furthermore, when the temperature of the fuel cell is decreased by the presence of the ambient temperature, it is also advantageous that partial oxidation reforming, which is an exothermic reaction, is performed.

In the solid oxide fuel cell system according to the seventh preferred embodiment of said second aspect of the invention, when switching between the oxygen-containing gas supply means and the water supply means is performed, an adverse effect on the fuel cell due to a rapid change can be prevented by operating both the supply means simultaneously for a predetermined period of time. Accordingly, a reforming reaction can be gradually switched.

### Brief Description of the Drawings

Fig. 1 is a block diagram that schematically shows a structure of a fuel cell system according to an embodiment of the present invention.
Fig. 2 is a block diagram that schematically shows another structure of a fuel cell system according to an embodiment of the present invention.

### Reference Numerals

- 1: fuel cell system
- 10: gas-water supply system
- 12: reforming gas supply means
- 13: oxygen-containing gas supply means
- 14: water supply means
- 15: gas supply control means
- 21: fuel cell
- 22: gas reformer
- 50: water tank
- 51: stored water volume sensor

### Best Mode for Carrying Out the Invention

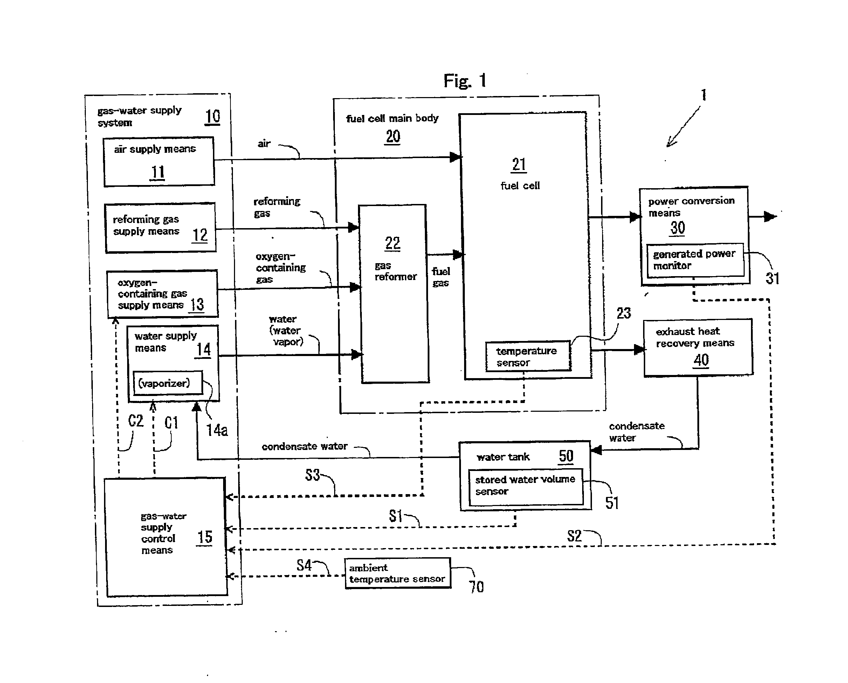

Fig. 1 is a simplified block diagram showing a solid oxide fuel cell system 1 according to an embodiment of the present invention. A fuel cell main body 20 includes a fuel cell 21 which is an assembly of cells each of which is formed by sandwiching an electrolyte between a pair of electrodes. A gas reformer 22 including a reforming catalyst therein is disposed so as to be adjacent to the fuel cell 21. Accordingly, heat generated by a power generation reaction of the fuel cell 21 and combustion heat of excess gas can be used for a reforming reaction in the gas reformer 22.

A gas-water supply system 10 that supplies a plurality of types of gases and water to the fuel cell main body 20 is provided. Each of the gases or water is supplied by an appropriate supply pipe connected to the fuel cell main body 20. An air supply means 11 supplies the fuel cell 21 with air containing oxygen. Furthermore, a hydrogen-rich fuel gas reformed in the gas reformer 22 is supplied to the fuel cell 21. Consequently, a power generation reaction is generated and an exhaust gas at a high temperature is discharged.

The gas-water supply system 10 further includes a plurality of supply means 12 to 14 that supply the gas reformer 22 with various types of gases and water. A reforming gas supply means 12 supplies a reforming gas used in a reforming reaction. As this reforming gas, not only an originally gaseous substance such as public gas or propane gas but also a substance obtained by vaporizing a liquid fuel such as kerosene or petroleum can be used. An oxygen-containing gas supply means 13 supplies an oxygen-containing gas such as air. A water supply means 14 supplies water or steam. When the water supply means 14 supplies steam, the water supply means 14 includes a vaporizer 14a. A description will now be made of an embodiment in which the water supply means 14 supplies water to the gas reformer 22 without further treatment. However, when the water supply means 14 supplies steam, control can be similarly performed.

Water supplied from the water supply means 14 to the gas reformer 22 is necessary for steam reforming (CH₄ + H₂ → 3H₂ + CO). On the other hand, the oxygen-containing gas supplied from the oxygen-containing gas supply means 13 to the gas reformer 22 is necessary for partial oxidation reforming (CH₄ + O₂ → 2H₂ + CO₂).

Supply of water to the gas reformer 22 can be allowed or stopped by, for example, operating or stopping a supply pump provided in the water supply means 14, or opening or closing an appropriate valve. Supply of the oxygen-containing gas to the gas reformer 22 can be allowed or stopped by, for example, operating or stopping a supply pump provided in the oxygen-containing gas supply means 13, or opening or closing an appropriate valve. Furthermore, operation and stopping of each of these supply pumps or opening or closing of each of the valves can be controlled by, for example, electrical control signals C1 and C2 output from a gas supply control means 15 including a control device of the gas-water supply system 10. Accordingly, water and/or the oxygen-containing gas can be selectively supplied to the gas reformer 22.

In addition, an exhaust heat recovery means 40 for recovering condensed water from an exhaust gas discharged from the fuel cell 21 is provided. The condensed water generated in the exhaust heat recovery means 40 is sent to a water tank 50 and stored therein. The condensed water is supplied, as water used for steam reforming, to the gas reformer 22 through the water supply means 14.

A stored water volume sensor 51 that detects the volume of stored condensed water is provided in the water tank 50. The stored water volume sensor 51 is a sensor, e.g., a float switch, which is switched between on and off states in accordance with a predetermined volume of water stored in the water tank 50. The predetermined stored water volume is set in advance. When the stored water volume sensor 51 detects the predetermined stored water volume, the stored water volume sensor 51 transmits the detection signal to the gas supply control means 15.

The actual operation method will now be described. In the normal operation of the fuel cell, the operation of steam reforming is performed by stopping the supply of an oxygen-containing gas from the oxygen-containing gas supply means 13 to the gas reformer 22 and supplying water in the water supply means 14. This is because steam reforming can achieve a higher power generation efficiency and thus the loss is low. By performing steam reforming, the condensed water in the water tank 50 is consumed, while condensed water is generated in the exhaust heat recovery means 40 and stored in the water tank 50.

The volume of condensed water stored in the water tank may be decreased for some reason (described below), and the level of the water tank may become equal to or lower than a predetermined value. In such a case, the switch of the stored water volume sensor 51 turns to the on state, and the detection signal is transmitted to the gas supply control means 15 (arrow S1). Consequently, the gas supply control means 15 detects that the stored volume of condensed water is small. The gas supply control means 15 then stops the operation of the water supply means 14 and starts the operation of the oxygen-containing gas supply means 13 (arrows C1 and C2). As a result, the operation is switched from steam reforming to partial oxidation reforming.

In the case where a rapid change in the gas supply adversely affects the fuel cell 21, both the gas supply means 13 and the water supply means 14 operate simultaneously for a predetermined period of time, and the operation is then gradually switched to the partial oxidation reforming reaction. Alternatively, the ratio of steam reforming to partial oxidation reforming may be gradually decreased, and the ratio of partial oxidation reforming to steam reforming may be gradually increased. During partial oxidation reforming, the condensed water in the water tank 50 is not used, and condensed water is generated in the exhaust heat recovery means 40. Accordingly, the volume of condensed water in the water tank 50 increases.

When the water volume stored in the water tank 50 becomes a high level exceeding the predetermined value, the switch of the stored water volume sensor 51 turns to the on state, and the detection signal is transmitted to the gas supply control means 15 (arrow S1). Consequently, the gas supply control means 15 detects that the stored volume of condensed water has been increased. The gas supply control means 15 then stops the operation of the oxygen-containing gas supply means 13 and starts the operation of the water supply means 14 (arrows C1 and C2). As a result, the operation is switched from partial oxidation reforming to steam reforming.

In the case where a rapid change in the gas supply adversely affects the fuel cell 21, both the gas supply means 13 and the water supply means 14 operate simultaneously for a predetermined period of time, and the operation is then gradually switched to the steam reforming reaction. Alternatively, the ratio of steam reforming to partial oxidation reforming may be gradually increased, and the ratio of partial oxidation reforming to steam reforming may be gradually decreased.

Furthermore, when the amount of power generation is decreased to a predetermined ratio or less of a rated value, for example, 40% or less, the temperature of the fuel cell 21 adjacent to the gas reformer 22 is decreased to 650°C because steam reforming is an endothermic reaction. Consequently, the performance of the cell is further degraded. In order to prevent this phenomenon, the amount of power generation of the fuel cell 21 or the temperature of the fuel cell 21 is detected and the operation of the water supply means 14 is stopped, while the operation of the oxygen-containing gas supply means 13 is started to switch from steam reforming to partial oxidation reforming. The amount of power generation of the fuel cell 21 is detected by, for example, a generated power monitor 31, and the detection signal is transmitted to the gas supply control means 15 (arrow S2). The temperature of the fuel cell 21 is detected by, for example, a fuel cell temperature sensor 23 such as a thermocouple, and the detection signal is transmitted to the gas supply control means 15 (arrow S3).

Since partial oxidation reforming is an exothermic reaction, a power generation reaction can be performed without decreasing the temperature of the fuel cell 21 adjacent to the gas reformer 22. In the case where a rapid change adversely affects the fuel cell 21, both the gas supply means 13 and the water supply means 14 operate simultaneously for a predetermined period of time, and the operation is then gradually switched to the partial oxidation reforming reaction. Alternatively, the ratio of steam reforming to partial oxidation reforming may be gradually decreased, and the ratio of partial oxidation reforming to steam reforming may be gradually increased. When the temperature of the fuel cell 21 is recovered to, for example, 700°C, the operation is then switched back to steam reforming.

Furthermore, when the ambient temperature is decreased, the temperature is detected with, for example, an ambient temperature sensor 70 such as a thermistor, and the detection signal is transmitted to the gas supply control means 15 (arrow S4). In response to this signal, the gas supply control means 15 stops the operation of the water supply means 14 and starts the operation of the oxygen-containing gas supply means 13. As a result, the operation is switched from steam reforming to partial oxidation reforming. Thereby, the problem of the impossibility of steam reforming due to freezing of water is eliminated. Furthermore, when the operating temperature of the fuel cell 21 is decreased by the presence of the ambient temperature, the same operation is performed. In the case where a rapid change adversely affects the fuel cell 21, both the gas supply means 13 and the water supply means 14 operate simultaneously for a predetermined period of time, and the operation is then gradually switched to the partial oxidation reforming reaction. Alternatively, the ratio of steam reforming to partial oxidation reforming may be gradually decreased, and the ratio of partial oxidation reforming to steam reforming may be gradually increased. When the ambient temperature of the fuel cell 21 is recovered to, for example, 4°C or higher, the operation is then switched back to steam reforming. Such control can also be performed by detecting, for example, the water temperature of the water tank 50 instead of the ambient temperature.

In the case where a rapid change in the gas supply adversely affects the fuel cell 21, both the gas supply means 13 and the water supply means 14 operate simultaneously for a predetermined period of time, and the operation is then gradually switched to the partial oxidation reforming reaction. Alternatively, the ratio of steam reforming to partial oxidation reforming may be gradually decreased, and the ratio of partial oxidation reforming to steam reforming may be gradually increased. In a specific control method for performing this, on the basis of the value detected by temperature-detecting means provided in the gas reformer, when the detected value is higher than a predetermined temperature range (e.g., 500°C to 700°C), the amount of oxygen-containing gas supplied is decreased and the amount of water supplied is increased. On the other hand, when the detected value is lower than the predetermined temperature range, the amount of oxygen-containing gas supplied is increased and the amount of water supplied is decreased. The amount of oxygen-containing gas supplied and the amount of water supplied are determined so as to be within a range in which an adverse effect such as carbon precipitation does not occur. Specifically, temperature-detecting means such as a thermocouple is provided in the gas reformer, and when a reforming reaction is performed by stopping water supply means and operating oxygen-containing gas supply means, the amount of oxygen-containing gas supplied and the amount of water supplied are preferably controlled so that the value detected by the temperature-detecting means does not deviate from a predetermined range.

When the operation is switched between the oxygen-containing gas supply means and the water supply means, an adverse effect such as carbon precipitation easily occurs under some temperature conditions of the gas reformer. However, by providing temperature-detecting means in the gas reformer and performing a reforming reaction while the amount of oxygen-containing gas and the amount water supplied are controlled so that the detected value is within a predetermined temperature range, the reforming operation can be safely switched without damage.

The fuel cell system of the present invention preferably has a power generation performance of, for example, in the range of 0.5 to 1.5 kW for household use, and is preferably used as a compact distributed power supply.

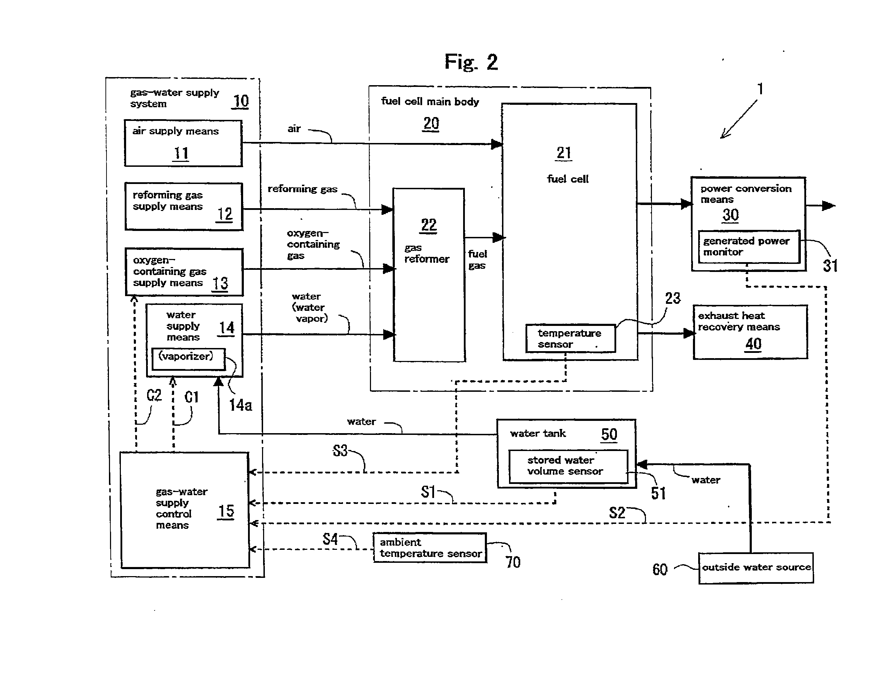

In the embodiment shown in Fig. 1, a description has been made of a case where the water tank stores water condensed by recovering exhaust heat of the fuel cell. Fig. 2 is a block diagram showing another embodiment of the present invention. In the embodiment shown in Fig. 2, a water tank 50 stores water supplied from an outside water source 60. Other structures are the same as those of the embodiment shown in Fig. 1. The outside water source 60 is, for example, a facility such as one providing public water or well water, and water is supplied to the water tank 50 by connecting appropriate piping. This structure can provide a fuel cell system that can be used, for example, in both areas where water infrastructure facilities (such as waterworks) are provided and areas where such water infrastructure facilities are not provided, e.g., remote countries and deserts. Furthermore, even when the supply of water is stopped because of a natural disaster or the like, the fuel cell system can continue to operate without stopping, and thus power supply can be reliably ensured in case of emergency such as a natural disaster. In addition, even when water cannot be supplied to the water tank 50 because of freezing of water in piping or the like, the fuel cell system can continue to operate without stopping. Furthermore, although not shown in the figures, a system obtained by combining the embodiment shown in Fig. 1 with the embodiment shown in Fig. 2 can also be used. More specifically, the water tank may store both water condensed by exhaust heat recovery and water supplied from an outside water source. In such a case, the water tank is connected to the exhaust heat recovery means as shown in Fig. 1, and also connected to the outside water source as shown in Fig. 2. An appropriate valve that can select and switch which water should be stored and means for controlling the valve may also be provided. In such a system, when the water level of the water tank storing condensed water is decreased to a predetermined level or lower for some reason, a float switch turns to the on state and water is supplied to the water tank from the outside water source. Furthermore, when water cannot be supplied from the outside water source (e.g., public water) for some reason and the water level is decreased to a predetermined level or lower, the float switch turns to the on state and partial oxidation reforming can be performed.

## Claims

1. A solid oxide fuel cell system (1) comprising:
a fuel cell main body (20) provided with a gas reformer (22) and a fuel cell (20);
a reforming gas supply means (12) for supplying a reforming gas to the gas reformer (22);
an oxygen- containing gas supply means (13) for supplying an oxygen-containing gas to the gas reformer (22);
a water supply means (14) for supplying water or steam to the gas reformer (22);
and an ambient temperature sensor (70) for detecting a temperature outside of the solid oxide fuel cell system (1), **characterized in that** the system (1) further comprises a control means (15) for controlling during operation of the fuel cell (21) whether, based on a signal from the ambient temperature sensor (70), for carrying out a reforming reaction of the reforming gas with the oxygen-containing gas and/or water in the gas reformer (22), switching between an oxygen-containing gas supply means (13) and water supply means (14) is carried out, or both the supply means (13, 14) are used in combination.

2. The solid oxide fuel cell system (1) according to claim 1, wherein, the control means (15) stops the water supply means (14) and activates the oxygen-containing gas supply means (13) for carrying out a reforming reaction if the control means (15), based on a signal from the ambient temperature sensor (70), detects that the temperature becomes lower than a predetermined value.

3. The solid oxide fuel cell system (1) according to one or more of the preceding claims, wherein, the control means (15) switches between the water supply means (14) and the oxygen-containing gas supply means (13) after both the supply means (13, 14) operate simultaneously for a predetermined period of time.
